# EUROPÄISCHE PATENTSCHRIFT

(11) **EP 3 299 352 B1**
(45) Veröffentlichungstag und Bekanntmachung des Hinweises auf die Patenterteilung: **28.11.2018**
(21) Anmeldenummer: 17001542.4
(22) Anmeldetag: 15.09.2017
(51) Int. Cl.: C04B 28/02, C04B 38/10, C04B 28/04

(54) **VERFAHREN ZUR HERSTELLUNG EINES WÄRMEDÄMMENDEN MÖRTELS**
METHOD FOR MANUFACTURING A THERMALLY INSULATED MORTAR
PROCÉDÉ DE FABRICATION D'UN MORTIER À ISOLATION THERMIQUE

(30) Priorität: 23.09.2016 DE 102016011471
(43) Veröffentlichungstag der Anmeldung: 28.03.2018
(73) Patentinhaber: Thomas, Tanja, 31787 Hameln (DE)
(72) Erfinder: MERTENS-THOMAS, Antonius, 31787 Hameln (DE)
(74) Vertreter: Flosdorff, Jürgen

(56) Entgegenhaltungen:
- WO-A1-94/12328
- RU-C1- 2 132 835
- RU-C1- 2 134 250
- US-A1- 2012 172 469

## Beschreibung

Die Erfindung betrifft ein Verfahren zur Herstellung eines wärmedämmenden Mörtels, das vor Ort bzw. auf Baustellen ausgeführt werden kann. Der Mörtel enthält Poren, die die Dichte des Mörtels herabsetzen und wärmedämmende Eigenschaften des Mörtels mit sich bringen.

Bei Porenmörtel oder Porenbeton wird je nach Art des Herstellungsverfahrens im Wesentlichen zwischen Gasbeton bzw. Gasmörtel und Schaumbeton bzw. Schaummörtel unterschieden. Gasbeton wird nur in speziellen Betonwerken hergestellt und enthält als Treibmittel hochexplosiven Wasserstoff, der durch Reaktion von Aluminium mit Zement im Beton entsteht und die Poren bildet. Dieses Verfahren erfordert eine aufwendige Prozesskontrolle, ist sehr energieintensiv, und es kann nicht vor Ort bzw. auf Baustellen ausgeführt werden.

Beim Schaumbeton oder Schaummörtel dient ein ungefährlicher Schaum als Porenbildner. Für dieses Verfahren sind ein Schaumbildner, ein Schaumgenerator, ein Schaumbetonmischer sowie eine Pumpe notwendig. Der mit dem Schaumgenerator und dem Schaumbildner erzeugte Schaum wird dem fertig gemischten Beton oder Mörtel direkt hinzugemischt. Dieses Verfahren ist einfach zu kontrollieren, energieschonend, zeitsparend und mobil einsetzbar. Es erlaubt die Reduzierung der Dichte von Beton oder Mörtel von 1900 kg/m³ auf bis zu 400 kg/m³. Ein entscheidender Nachteil des "Vorschäumens" besteht darin, dass es praktisch unmöglich ist, den fertigen Schaum gleichmäßig dosiert unterzumischen, wodurch es zu Abweichungen innerhalb des fertigen Gemischs von mehr als 20 Prozent kommt. Die Trocknungszeit beträgt bei diesem Verfahren ca. 4 - 8 Tage.

Die Schaumbildner werden anhand der Wirkstoffbasis unterteilt in Proteinbasis und Tensidbasis (synthetische Schaumbildner).

Schaumbildner auf Proteinbasis werden durch Proteinhydrolyse meist tierischer Proteine aus Horn, Blut, Knochen und ähnlichen Abfällen von Rindern, Schweinen und sonstigen Tierkadavern hergestellt. Dies führt aufgrund der wechselnden Rohstoffe zu Schwankungen im Endprodukt und zu einem sehr unangenehmen Geruch der Produkte.

Synthetische Schaumbildner sind rein chemischen Ursprungs mit konstanter Qualität, sie werden für die Herstellung von Schaumbeton aufgrund ihrer häufig geringeren Stabilität jedoch nicht favorisiert.

Das Dokument US 2012/0172469 A1 offenbart ein Verfahren zur Herstellung eines Mörtels, dadurch gekennzeichnet, dass Wasser, ein reaktives Pulver, Aggregate, Alkalimetallsalz von Zitronensäure, Alkalimetallsilikat, Zement und ein flüssiges Tensid in ein Hobart Mischer eingebracht werden, wodurch ein zementartiger Schaum entsteht.

Allgemein besteht ein Nachteil des vorgeschäumten Schaums darin, dass keine 100 prozentige Vermischung mit dem Bindemittel Zement oder Gips möglich ist.

Der vorliegenden Erfindung liegt die Aufgabe zugrunde, ein Verfahren zur Herstellung eines Porenmörtels oder Porenbetons anzugeben, bei dem die oben erwähnten Nachteile vermieden sind.

Diese Aufgabe wird durch die Merkmale des Patentanspruchs 1 gelöst. Vorteilhafte Ausgestaltungen des erfindungsgemäßen Verfahrens sind in den Unteransprüchen gekennzeichnet.

Das erfindungsgemäße Verfahren sieht vor, dass Wasser, Zement und ein flüssiges Tensid-Schaumkonzentrat (flüssiges Tensid enthaltendes, Schaum bildendes Konzentrat) in einem vorbestimmten Mischungsverhältnis in ein Mischgerät mit einem Flügelmischrad mit im wesentlichen horizontaler Antriebswelle eingebracht wird und dass das Flügelmischrad mit sehr hoher Geschwindigkeit rotiert, wobei eine homogene Vermischung zwischen dem Wasser, dem Zement und dem sich bildenden Schaum eintritt und der Schaum in dem Wasser-Zement-Gemisch so fein verteilt wird, das eine kolloidale Suspension bzw. Dispersion entsteht.

Als Kolloide werden Teilchen oder Tröpfchen bezeichnet, die im Dispersionsmedium, im vorliegenden Fall dem Zement-Wasser-Gemisch, fein verteilt sind. Die Größe der einzelnen Teilchen liegt vorzugsweise im Nanometer- oder Mikrometer-Bereich.

Die kolloiddisperse Mörtelmasse hat durch die feine Verteilung des gebildeten Schaums zwischen diesem und dem Wasser-Zement-Gemisch eine enorm große Grenzfläche. Es tritt eine homogene Vermischung zwischen Wasser, Zement und dem sich in dem Mischgerät bildenden Schaum ein, was zur Folge hat, das der sich bildende Schaum und Zement zu einer Einheit in dem kolloidalen Mischprozess vereint werden.

Der erfindungsgemäß hergestellte Mörtel hat beste wärmedämmende Eigenschaften sowie eine hohe Festigkeit in Folge der winzigen, gleichmäßig in dem Gemisch verteilten Poren. Der Porenmörtel ist nicht brennbar und baubiologisch schadstofffrei gegenüber der Raumluft.

Zur Herstellung der erfindungsgemäßen kolloidalen Suspension bzw. Dispersion bedarf es einer Mischeinrichtung, bei der die Mischgeschwindigkeit am Flügelmischrad sehr hoch ist. Sie beträgt vorzugsweise 3 - 4 m/s. Hierdurch werden gravimetrische Kräfte auf die zu mischende Dispersion wirksam. Durch die hohe Umdrehungszahl von vorzugsweise ca. 8.000 U/min und die damit entstehende gravimetrische Reibungswirkung an den Behälterwandungen des Mischgeräts wird - so wird angenommen - die Struktur des Wasser-Zement-Gemischs aufgebrochen und ihre Oberfläche um das 100-fache vergrößert. Damit bildet sich eine neue Molekularstruktur innerhalb der Dispersion, die für eine im höchsten Maße homogene Mischung sorgt.

Ein bevorzugtes Mischungsverhältnis des erfindungsgemäßen Porenmörtels enthält 25 kg Zement, vorzugsweise Portlandzement PZ 52,5 CEM 1, 20 - 25 Liter Wasser und 200 ml flüssiges Tensid- Schaumkonzentrat. Diese Mischung ergibt nach einer Mischzeit von bevorzugt 2 - 3 Minuten in dem Mischgerät eine Mörtelmasse von 120 - 130 l.

Das flüssige Tensid-Schaumkonzentrat besteht vorzugsweise aus:
8 bis 15 % Sodium alkylsulfat C 10-C16,
1 bis 3 % Sodium Alfa-olefinsulfonat,
7 bis 10 % Ammonium alkyldimethilchloride,
50 bis 84 % Anteil Wasser, vorzugsweise 50 bis 74 % Wasser.

Dem obigen bevorzugten Mischungsverhältnis können 100 - 150 ml Verflüssiger (Polycarboxylat-Ether) und/oder 80 g Kunststofffasern (vorzugsweise 20 mm lang) und/oder 10 Liter Korkgranulat (vorzugsweise 1 - 4 mm) beigemischt werden. Die Kunststofffasern erhöhen die Festigkeit, während das Korkgranulat zu einem erhöhten Trittschallschutz führt.

Das Raumgewicht des Mörtels liegt zwischen 100 und 1000 kg/m³ und wird durch das Verhältnis der obigen Komponenten bestimmt. Das so gemischte Material benötigt eine Trocknungszeit von ca. 24 Stunden. Die Wärmeleitfähigkeit des trockenen Mörtels liegt bei ca. 0,069 W/(m·K).

Der erfindungsgemäße Mörtel ist vollständig recycle-fähig und ist nicht mit einem Entsorgungsproblem verbunden, wie dies bei vielen herkömmlichen Dämmstoffen der Fall ist. Der Energiebedarf der Herstellung im Kaltverfahren ist gering und kann als CO₂-neutral eingestuft werden. Der Mörtel entspricht der europäischen Bauproduktenverordnung und gehört in die Brandschutzklasse A1, ist wärmedämmend, dampfdiffusionsoffen, frei von raumluftgefährdenden Schadstoffen, und wiederverwertbar. Das Material kann komplett wiederverwertet werden, indem es gemahlen wird und lediglich die Komponenten Wasser und Schaumkonzentrat wieder in einen erneuten Mischprozess zugegeben werden.

Beispiele für die Anwendungsgebiete sind:
- Hohlraumverfüllung im Innenbereich und Außenbereich,
- Dachdämmung
- Fußbodenausgleich (Ausgleich von auf dem Fußboden verlegten Rohrleitungen und zugleich die erste Lage Dämmung,
- Schwimmbadumrandungen als wärmedämmende Schicht.

## Patentansprüche

1. Verfahren zur Herstellung eines wärmedämmenden Mörtels,
**dadurch gekennzeichnet,**
**dass** Wasser, Zement und ein flüssiges Tensid enthaltendes, Schaum bildendes Konzentrat in ein Mischgerät mit einem Flügelmischrad eingebracht werden und
**dass** das Flügelmischrad mit sehr hoher Geschwindigkeit von ca. 8.000 U/min rotiert, wodurch eine homogene Vermischung zwischen dem Wasser, dem Zement und dem sich bildenden Schaum eintritt und
der Schaum in dem Wasser-Zement-Gemisch so fein verteilt wird, dass eine kolloidale Suspension oder Dispersion entsteht.

2. Verfahren nach Anspruch 1,
**dadurch gekennzeichnet,**
**dass** die Geschwindigkeit des Gemischs am Flügelmischrad 3 bis 4 m/sec beträgt.

3. Verfahren nach einem der Ansprüche 1 oder 2,
**dadurch gekennzeichnet,**
**dass** das Mischungsverhältnis von Zement zu Wasser zu dem flüssigen Tensid enthaltenden, Schaum bildenden Konzentrat 25kg zu 20 bis 25 I zu 200 ml beträgt.

4. Verfahren nach Anspruch 3,
**dadurch gekennzeichnet,**
**dass** dem Mischungsverhältnis 100 bis 150 ml Verflüssiger, bevorzugt Polycarboxylat-Ether hinzugefügt werden.

5. Verfahren nach Anspruch 3 ober 4,
**dadurch gekennzeichnet,**
**dass** dem Mischungsverhältnis 80g Kunststofffasern hinzugefügt werden.

6. Verfahren nach einem der Ansprüche 3 bis 5,
**dadurch gekennzeichnet,**
**dass** dem Mischungsverhältnis 10 l Korkgranulat hinzugefügt werden.

7. Verfahren nach einem der Ansprüche 1 bis 6,
**dadurch gekennzeichnet,**
**dass** als Zement Portlandzement PZ 52,5 CEM 1 verwendet wird.

8. Mörtel, der nach einem der Ansprüche 5 bis 7 hergestellt ist,
**dadurch gekennzeichnet,**
**dass** das Raumgewicht der Schaum-Wasser-Zement-Faser-Mischung zwischen 100 und 1.000 kg/m³ liegt.

9. Mörtel, der nach einem der Ansprüche 1 bis 8 hergestellt ist,
**dadurch gekennzeichnet,**
**dass** die Erhärtungszeit 24h beträgt.

10. Mörtel, der nach einem der Ansprüche 1 bis 9 hergestellt ist,
**dadurch gekennzeichnet,**
**dass** die Wärmeleitfähigkeit des trockenen Mörtel 0,069 W/(m·K) beträgt.

## Claims

1. A method of manufacturing a thermally insulating mortar, **characterised in that** water, cement and a concentrate, which contains a liquid tenside and forms a foam, are introduced into a mixing device with a mixing impeller and that the mixing impeller rotates with a very high speed of ca. 8,000 RPM, whereby a homogeneous mixing of the water, the cement and the foam which forms occurs and the foam is so finely distributed in the water-cement mixture that a colloidal suspension or dispersion is produced.

2. A method as claimed in Claim 1, **characterised in that** the speed of the mixture at the mixing impeller is 3 to 4 m/sec.

3. A method as claimed in one of Claims 1 or 2, **characterised in that** the mixing ratio of cement to water to the concentrate, which contains liquid tenside and forms a foam, is 25kg to 20 to 25 l to 200 ml.

4. A method as claimed in Claim 3, **characterised in that** 100 to 150 ml plasticizer, preferably polycarboxylate ether, is added to the mixing ratio.

5. A method as claimed in Claim 3 or 4, **characterised in that** 80g plastic fibres are added to the mixing ratio.

6. A method as claimed in one of Claims 3 to 5, **characterised in that** 10 l cork granulate is added to the mixing ratio.

7. A method as claimed in one of Claims 1 to 6, **characterised in that** Portland Cement PZ 52,5 CEM 1 is used as the cement.

8. Mortar, which is manufactured in accordance with one of Claims 5 to 7, **characterised in that** the bulk density of the foam-water-cement-fibre mixture is between 100 and 1,000 kg/m³.

9. Mortar, which is manufactured in accordance with one of Claims 1 to 8, **characterised in that** the setting time is 24h.

10. Mortar, which is manufactured in accordance with one of Claims 1 to 9, **characterised in that** the thermal conductivity of the dry mortar is 0.069 W/(m·K).

## Revendications

1. Procédé de fabrication d'un mortier à isolation thermique,
**caractérisé en ce**
**que** de l'eau, du ciment, un concentré formant de la mousse contenant un tensioactif liquide sont introduits dans un mélangeur avec une roue de mélange à pales et
**que** la roue de mélange à pales tourne à une vitesse très élevée d'environ 8000 tr/min, ce qui donne lieu à un mélange homogène entre l'eau, le ciment et la mousse se formant et
la mousse est finement répartie dans le mélange eau-ciment de sorte qu'une suspension ou dispersion colloïdale soit formée.

2. Procédé selon la revendication 1,
**caractérisé en ce**
**que** la vitesse du mélange au niveau de la roue de mélange à pales est de 3 à 4 m/s.

3. Procédé selon l'une quelconque des revendications 1 ou 2,
**caractérisé en ce**
**que** le rapport de mélange entre le ciment et l'eau et le concentré formant de la mousse, contenant le tensioactif liquide est de 25 kg pour 20 à 25 l pour 200 ml.

4. Procédé selon la revendication 3,
**caractérisé en ce**
**que** 100 à 150 ml de condenseur, de préférence éther de polycarboxylate sont ajoutés au rapport de mélange.

5. Procédé selon la revendication 3 ou 4,
**caractérisé en ce**
**que** 80 g de fibres synthétiques sont ajoutés au rapport de mélange.

6. Procédé selon l'une quelconque des revendications 3 à 5,
**caractérisé en ce**
**que** 10 l de granulés de liège sont ajoutés au rapport de mélange.

7. Procédé selon l'une quelconque des revendications 1 à 6,
**caractérisé en ce**
**que** du ciment Portland PZ 52,5 CEM 1 est utilisé en tant que ciment.

8. Mortier qui est fabriqué selon l'une quelconque des revendications 5 à 7,
**caractérisé en ce**
**que** la masse volumique du mélange mousse-eau-ciment-fibres se situe entre 100 et 1000 kg/m³.

9. Mortier qui est fabriqué selon l'une quelconque des revendications 1 à 8,
**caractérisé en ce**
**que** le temps de durcissement est de 24 h.

10. Mortier qui est fabriqué selon l'une quelconque des revendications 1 à 9,
**caractérisé en ce**
**que** la conductibilité thermique du mortier sec est de 0,069 W/(m·K).
